# EUROPÄISCHE PATENTSCHRIFT

(11) **EP 3 307 516 B1**
(45) Veröffentlichungstag und Bekanntmachung des Hinweises auf die Patenterteilung: **30.12.2020**
(21) Anmeldenummer: 16715242.0
(22) Anmeldetag: 08.04.2016
(51) Int. Cl.: B29C 49/42, B29C 49/46, A61J 1/06, B65B 39/12, B29C 49/48, B29L 31/00, B65B 3/02

(54) **VERFAHREN SOWIE VORRICHTUNG ZUM HERSTELLEN EINES BEFÜLLTEN UND GESCHLOSSENEN BEHÄLTERS**
METHOD AND DEVICE FOR PRODUCING A FILLED AND CLOSED CONTAINER
PROCÉDÉ AINSI QUE DISPOSITIF DE PRODUCTION D'UN RÉCIPIENT REMPLI ET FERMÉ

(30) Priorität: 11.06.2015 DE 102015007690
(43) Veröffentlichungstag der Anmeldung: 18.04.2018
(73) Patentinhaber: Kocher-Plastik Maschinenbau GmbH, 74429 Sulzbach-Laufen (DE)
(72) Erfinder: SCHUBERT, Otto, 6153 Ufhusen (CH); EGLI, Bruno, 4954 Wyssachen (CH); LÜSCHER, Martin, 5054 Moosleerau (CH); MUFF, Alexander, 6018 Buttisholz (CH)
(74) Vertreter: Bartels und Partner, Patentanwälte
(86) Internationale Anmeldenummer: PCT/EP2016/000584
(87) Internationale Veröffentlichungsnummer: WO 2016/198135

(56) Entgegenhaltungen:
- EP-A1- 2 517 962
- EP-A2- 2 412 664
- DE-A1-102012 104 267
- DE-A1-102014 210 234
- US-A1- 2007 060 666

## Beschreibung

Die Erfindung betrifft eine Vorrichtung zum Befüllen eines Behälters mit den Merkmalen im Oberbegriff von Anspruch 1. Die Erfindung betrifft ferner ein Verfahren unter Verwendung der Vorrichtung zum Herstellen eines befüllten und geschlossenen Behälters, insbesondere nach dem Blasform-, Füll- und Schließverfahren.

Dahingehende Verfahren zum Blasformen, aseptischen Abfüllen und hermetischen Verschließen in einer Maschine finden insbesondere im Bereich der Pharmazeutika, aber auch bei Softdrinks und chemisch-technischen Produkten Anwendung. Bei dem von der Firma kocher-plastik patentierten und durch die Firma rommelag weltweit eingeführten Verfahren, das unter der Markenbezeichnung "bottelpack®" bekannt geworden ist, wird in einem ersten Arbeitsschritt analog zum traditionellen Extrusions-Blasformen ein Schlauch extrudiert und von der geöffneten Blasform übernommen. Der Hauptteil der Blasform schließt sich und verschweißt dabei den Boden des Behälters. Im Halsbereich wird eine speziell geformte Blasform-Fülleinheit aufgesetzt, die den eigentlichen Behälterbereich zum noch nicht ausgeformten Halsbereich hin abdichtet. Über diesen Blasdorn wird nun der eigentliche Behälter mit Sterilluft aufgeblasen. Kleinere Behälter, wie Augentropfen-Eindosisampullen, werden durch Vakuum ausgeformt. Der außerhalb verbliebene Teil des Schlauches bleibt während dieses Vorgangs heiß und plastisch verformbar weich. Im nächsten Schritt wird über einen Fülldorn das Füllgut in den Behälter eingefüllt. Nach dem Abheben der Blasform-Fülleinheit schließt die Kopfbacke des Formwerkzeugs und verschweißt das Behältnis hermetisch dicht. Gleichzeitig wird die gewünschte Kopf- bzw. Verschlusskontur mittels Vakuum ausgeformt. Mit dem Öffnen der Blasform verlässt der gefüllte, fertige Behälter die Blasform und der nächste Herstellzyklus kann beginnen. Der ganze Prozess findet vorzugsweise unter aseptischen Bedingungen (Edelstahl, sterile Blas- und Spülluft etc.) statt, so dass die internationalen Standards, (z.B. cGMP, FDA) für aseptische Verpackungen erfüllt werden (THIELEN, Michael; HARTWIG, Klaus; GUST, Peter: Blasformen von Kunststoff-Hohlkörpern. München : Hanser, 2006).

Eine nach diesem Verfahren hergestellte Doppelkammer-Ampulle ist durch die EP 1 799 557 B1 bekannt. Der dahingehend ampullenartig ausgebildete Behälter besteht aus einem elastisch nachgiebigen Kunststoffmaterial mit einer Dosierkammer, in der als befüllter Behälterteil sich ein einziges Abgabemedium befindet, wobei das eine Ende der Dosierkammer eine Abgabeöffnung aufweist und das gegenüberliegende Ende ist über eine Verbindungsstelle mit einem zusammendrückbaren Behälterkopfteil verbunden, in dem sich ein gasförmiges Austreibmedium, insbesondere in Form von Luft, befindet, wobei beim Zusammendrücken des Behälterkopfteils das Austreibmedium zumindest teilweise das Abgabemedium aus der Dosierkammer über die freigegebene Abgabeöffnung nach außen hin für die Applikation bei einem Patienten od. dgl. verdrängt. Die angesprochene Verbindungsstelle zwischen der Dosierkammer als dem einen weiteren Behälterteil und dem Behälterkopfteil des Behälters ist aus einer Engstelle gebildet, die derart ausgestaltet ist, dass eine Kapillarwirkung entsteht, die unabhängig von der räumlichen Lage des Behälters einen Übertritt des Abgabemediums aus der Dosierkammer in den Behälterkopfteil mit dem Austreibmedium in jedem Fall verhindert.

Darüber hinaus ist in der DE 44 20 594 C2 bereits vorgeschlagen worden, in die Dosierkammer zwischen dem bevorrateten Abgabemedium und der Engstelle, an der sich nach oben hin das Behälterkopfteil mit dem aufgenommenen Austreibmittel anschließt, ein Abschlussteil in Form eines Trennkolbens einzusetzen, der in Richtung der freigegebenen Abgabeöffnung des Behälters verfährt und dabei dergestalt das Ausbringen des Behälterinhalts wiederum in Form eines einzigen Abgabemediums aus dem Behälter erleichtern hilft, sobald durch Zusammendrücken von Hand die Luft im Behälterkopfteil über die Engstelle in Richtung der Dosierkammer verdrängt wird und dabei den Trennkolben für den Austragvorgang mitnimmt.

Die DE 10 2014 210 234 A1 beschreibt eine Vorrichtung zum Befüllen eines Behälters, wobei mindestens zwei Dosiereinheiten für je in ein Behälterteil über dessen freie Öffnung einzufüllende Abgabemedien jeweils auf einer Verschiebeeinheit festgelegt sind.

Die DE 10 2014 210 234 A1 beschreibt außerdem ein Verfahren unter Verwendung der Vorrichtung zum Herstellen eines befüllten und geschlossenen Behälters, insbesondere nach dem Blasform-, Füll- und Schließverfahren, bei dem ein zunächst offenes, in einem Formwerkzeug gehaltenes, mittels eines Blasdorns blasgeformtes und/oder vakuumgeformtes Behälterteil über seine freie, nach oben hin ausgerichtete Behälterteilöffnung mittels Dosiereinheiten in Hintereinanderabfolge mit Medien unterschiedlicher Art, insbesondere Viskosität, befüllt wird, anschließend mit Schließen der Kopfformhälften des Formwerkzeuges ein Behälterkopfteil geformt und das Behälterteil unter Bildung des Behälters verschlossen wird, wobei jedes in das Behälterteil einzufüllende Medium mit einer ihm zuordenbaren eigenen Dosiereinheit zugeführt wird.

Eine Behältnisherstellungsanlage geht aus der DE 10 2012 104 267 A1 hervor.

Ausgehend von diesem Stand der Technik liegt der Erfindung die Aufgabe zugrunde, die bekannten, technisch bewährten Lösungen dahingehend weiter zu verbessern.

Eine dahingehende Aufgabe löst eine Vorrichtung mit den Merkmalen des Patentanspruchs 1 in seiner Gesamtheit und ein Verfahren mit den Schritten des Patentanspruchs 3 in seiner Gesamtheit.

Gemäß dem Kennzeichen von Anspruch 1 ist vorgesehen, dass die Verschiebeeinheit mittels mindestens eines Antriebsmittels über eine Schrägführung einer Kulissenführung die jeweilige Dosiereinheit aus einer Ausgangsposition in eine Abgabeposition über die Behälterteilöffnung und wieder zurück verfährt.

Nach dem erfindungsgemäßen Verfahren ist vorgesehen, dass ein zunächst offenes, in einem Formwerkzeug gehaltenes, mittels eines Blasdorns blasgeformtes und/oder vakuumgeformtes Behälterteil über seine freie, nach oben hin ausgerichtete Behälterteilöffnung mittels Dosiereinheiten in Hintereinanderabfolge mit Medien unterschiedlicher Art, insbesondere unterschiedlicher Viskosität, derart befüllt wird, dass im Behälterteil die eingefüllten Medien voneinander separiert werden, und anschließend mit Schließen der Kopfformhälften des Formwerkzeuges ein Behälterkopfteil geformt und das Behälterteil unter Bildung des Behälters verschlossen wird. Dergestalt lassen sich während nur eines Füllprozesses mindestens zwei voneinander unterschiedliche Rezepturen in nur einen Behälter einbringen, wobei auch bei geschlossenem Behälter die dahingehend unterschiedlich eingefüllten Medien voneinander weiter separiert bleiben. Als besonders vorteilhaft hat es sich dabei erwiesen, als einzufüllende Medien hochviskose, zähfließende salbenartige Produkte, wozu auch Cremes und Gele gehören, zu verwenden und diese schichtweise übereinander in den Behälter abzufüllen, wobei die dahingehende Trennung auch bei geschlossenem Behälter nach wie vor beibehalten wird.

Sofern für das erfindungsgemäße Verfahren als jeweils einzufüllendes Medium Salben mit unterschiedlicher Viskosität zum Einsatz kommen, ist eine kompakte Füllung der Salbe möglichst ohne Lufteinschlüsse innerhalb des Behälters erwünscht, wobei aufgrund der fehlenden Lufteinschlüsse jedenfalls die spätere Entnahmefunktion des insoweit hergestellten Behälter-Applikators nicht beeinträchtigt ist. Nachdem die erste Schicht respektive das erste Medium in das Behälterteil des Behälters eingefüllt ist, darf es zu keiner Durchmischung mit der nachfolgenden, darüberliegenden Medienschicht kommen, wozu mit beiträgt, dass das nachfolgend eingefüllte Medium nicht mit zu starkem Füllstrahl in das Behälterteil des Behälters eingebracht wird. Dergestalt lässt sich eine Trennschicht zwischen den Salben möglichst als ebene Fläche erzeugen und auch ohne Kraterbildung, die ansonsten die Durchmischung der Medienschichten im Behälter begünstigen könnte.

Besonders bevorzugt werden nur zwei Medien in den zu formenden Behälter eingebracht; es besteht aber auch die Möglichkeit, mehr als zwei Medien voneinander separiert in dem zu schließenden Behälter zu bevorraten. Auch braucht die Anwendung nicht auf hochviskose Medien und Produkte eingeschränkt zu sein; vielmehr lassen sich auch hochviskose Medien mit niedrigviskosen Medien für eine getrennte Behälterfüllung vorsehen. Dem Grunde nach sind alle Arten von Medien, die sich selbst und insbesondere von ihrer Viskosität her separieren lassen, für den Einfüllvorgang mit dem erfindungsgemäßen Verfahren geeignet. Grundsätzlich kommen also, je nach Anwendungsfall, alle Arten von Fluiden in Frage sowie pastöse und pulver- oder partikelförmige Substanzen. So ließe sich durchaus im Rahmen des erfindungsgemäßen Verfahrens eine hochviskose Salbe mit einem pastösen Arzneimittelpulver über eine Trennschicht im Behälter voneinander permanent separiert in diesem aufnehmen.

Ferner wird ein Behälter offenbart, der hergestellt ist nach dem vorstehend bezeichneten Verfahren mit einer ebenso vorstehend aufgezeigten Vorrichtung und der dadurch charakterisiert ist, dass in seinem abgeschlossenen Behälterteil mindestens zwei Medien in Übereinanderanordnung und voneinander separiert aufgenommen sind, wobei die dahingehende Medientrennung auch beibehalten wird, sobald der Medienverbund als Ganzes wiederum in derselben Hintereinanderabfolge, wie in das Behälterteil eingebracht, aus selbigem für eine Applikation ausgedrückt oder sonst wie entnommen wird.

Im Folgenden wird die erfindungsgemäße Lösung anhand der Zeichnung näher erläutert. Dabei zeigen in prinzipieller und nicht maßstäblicher Darstellung die
- Fig. 1 und 2: in Seitenansicht und einmal in Draufsicht die Herstellvorrichtung zum Durchführen des erfindungsgemäßen Herstellverfahrens in einer Grund-Ausgangsstellung;
- Fig. 3 bis 5: eine der Fig. 1 entsprechende Darstellung in verschiedenen Herstellpositionen; und
- Fig. 6: ein mit der Vorrichtung nach den Fig. 1 bis 5 hergestelltes Behältererzeugnis.

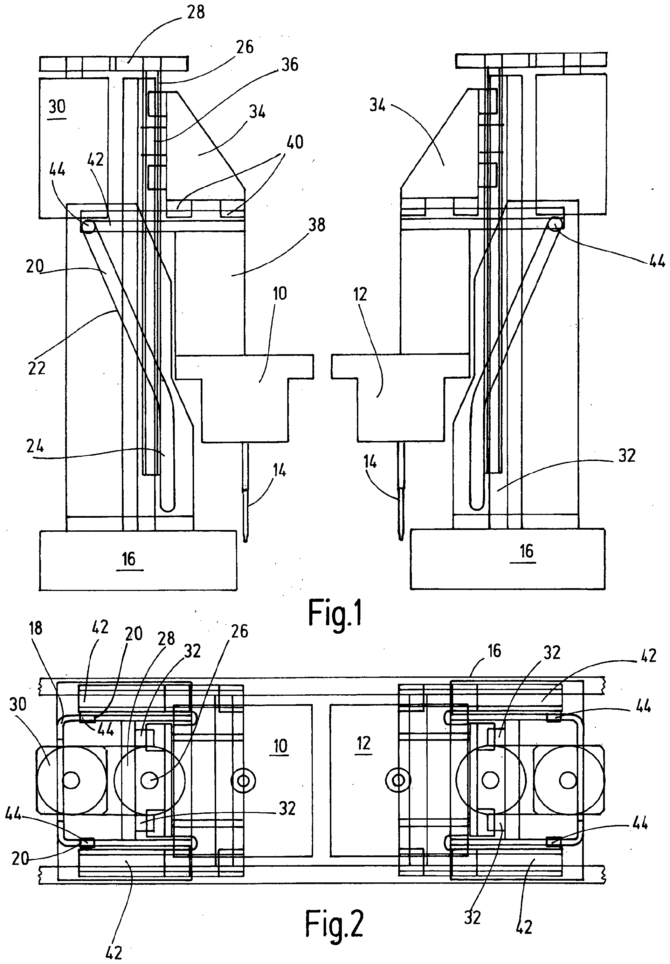

Die in der Fig. 1 in einer Seitendarstellung gezeigte Herstellvorrichtung ist für das Zuführen von zwei unterschiedlichen Medien in Form von Salben vorgesehen, die sich in ihrer Viskosität voneinander unterscheiden sollen. Dabei ist für die Zufuhr der einen Salbe eine Dosiereinheit 10 vorgesehen und für die andere Salbe eine Dosiereinheit 12. Die jeweilige Dosiereinheit 10, 12 weist auf ihrer Unterseite einen gleich aufgebauten Fülldorn 14 auf. Da die Maschinenvorrichtung zum Bewegen der Dosiereinheit 10 sowie der Dosiereinheit 12 dem Grund nach gleich aufgebaut ist, wird zunächst nur für die Dosiereinheit 10 die dahingehende Betätigungsvorrichtung näher erläutert, wobei die Fig. 2 eine Draufsicht der Herstellvorrichtung nach der Fig. 1 darstellt.

Auf einem Maschinentisch 16 einer nicht näher dargestellten Blasform-, Füll- und Siegelmaschine ist ständerartig ein Grundträger 18 angeordnet, der, wie die Fig. 2 zeigt, mit im Wesentlichen U-förmig zueinander angeordneten Wandteilen im Querschnitt oder in Draufsicht gesehen ausgebildet ist. In die einander gegenüberliegenden Parallelwände des Grundträgers 18 ist je eine Kulissenführung 20 durchgehend eingebracht, die, wie sich aus der Fig. 1 ergibt, zunächst im oberen Teil über eine Schrägführung 22 verfügt, die in ihrem unteren Teil in ein vertikal verlaufendes, schienenartiges Führungsstück 24 übergeht. Eine fiktive Verlängerung der Schrägführung 22 bildet mit der Oberseite des Maschinentisches 16 einen eingeschlossenen Winkel von etwa 65° Neigungswinkel aus. Des Weiteren ist in etwa mittig innerhalb des Grundträgers 18 eine Antriebsspindel 26 geführt, die über ein Getriebe 28 antreibbar ist, beispielsweise in Form eines Riementriebes, der wiederum von einem Elektromotor 30 antreibbar ist. Anstelle des genannten Riementriebes kann auch ein Zahnradgetriebe oder dergleichen für das Getriebe 28 stehen.

Wie sich des Weiteren aus den Fig. 1 und 2 ergibt, sind innerhalb des U-förmigen Grundträgers 18 und gleichfalls in senkrechter Anordnung verlaufend parallel zur stangenförmigen Antriebsspindel 26 zwei Führungsstangen 32 angeordnet, entlang denen in der Art eines Maschinensupports eine Konsole 34 verfahrbar geführt ist, die mit einer Antriebsmutter 36 den Spindeltrieb 26 mit seinen Antriebsgängen umfasst. Treibt der Elektromotor 30 über die Antriebsspindel 26 die Konsole 34 supportartig an, kann diese in Blickrichtung auf die Fig. 1 gesehen von der obersten, gezeigten Stellung nach unten verfahren. In Blickrichtung auf die Fig. 1 gesehen ist auf der Unterseite der Konsole 34 eine Verschiebeeinheit 38 angeordnet, die über eine Horizontalführung 40 in horizontaler Richtung längsverfahrbar in der Konsole 34 unterhalb derselben geführt ist. Ferner weist die Verschiebeeinheit 38 zwei rückwärtig vorspringende Führungsstege 42 auf, die jeweils eine in Richtung des Grundträgers 18 vorspringende Führungsrolle 44 tragen, die jeweils in die zuordenbare Kulissenführung 20 eingreifen. Des Weiteren ist auf der Unterseite der Konsole 34 mit ihren beiden oben verlaufenden Führungsstegen 42 die Dosiereinheit 10 über die dazwischenliegende Verschiebeeinheit 38 angeordnet.

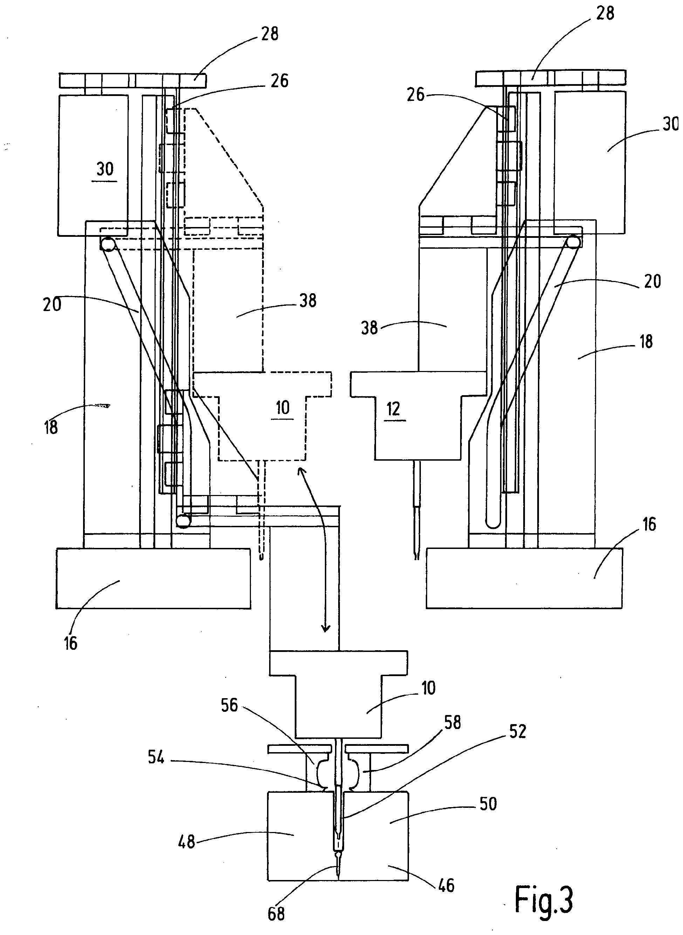

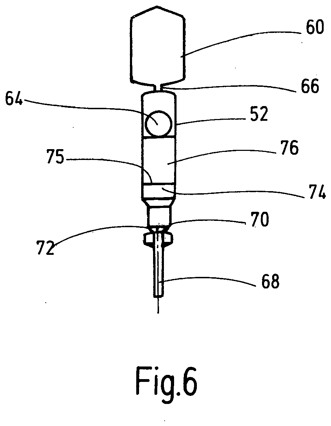

Verfährt in Blickrichtung auf die Fig. 1 gesehen nach Betätigen des Elektromotors 30 nebst Getriebe 28 und Antriebsspindel 26 die Konsole 34 nach unten, nimmt sie die Verschiebeeinheit 38 in dieser Bewegung mit, wobei aufgrund der Kulissenführung 20, in die die Führungsrollen 44 der Verschiebeeinheit 38 eingreifen, diese gleichzeitig eine Horizontalbewegung erfahren bis zum Ende der Schrägführung 22, wo dann wiederum die Verschiebeeinheit 38 nur in vertikaler Richtung entlang der beiden vertikal verlaufenden Führungsstücke 24 der Kulissenführung 20 bewegt wird. Wie insbesondere die Darstellung nach der Fig. 3 zeigt, kommen dann in der voll ausgefahrenen Abgabestellung oder Abgabeposition die Führungsrollen 44 der Verschiebeeinheit 38 in untere Anlage mit dem Ende des jeweils vertikal verlaufenden Führungsstückes 24 der Kulissenführung 20. In dieser Stellung sind die Führungsstege 42 der Verschiebeeinheit 38 innerhalb der Horizontalführung 40 der Konsole 34 in ihrer voll ausgefahrenen Stellung und die Dosiereinheit 10 befindet sich gemäß der Darstellung nach der Fig. 3 oberhalb des Formwerkzeugs 46 für einen Behälter gemäß der Darstellung nach der Fig. 6.

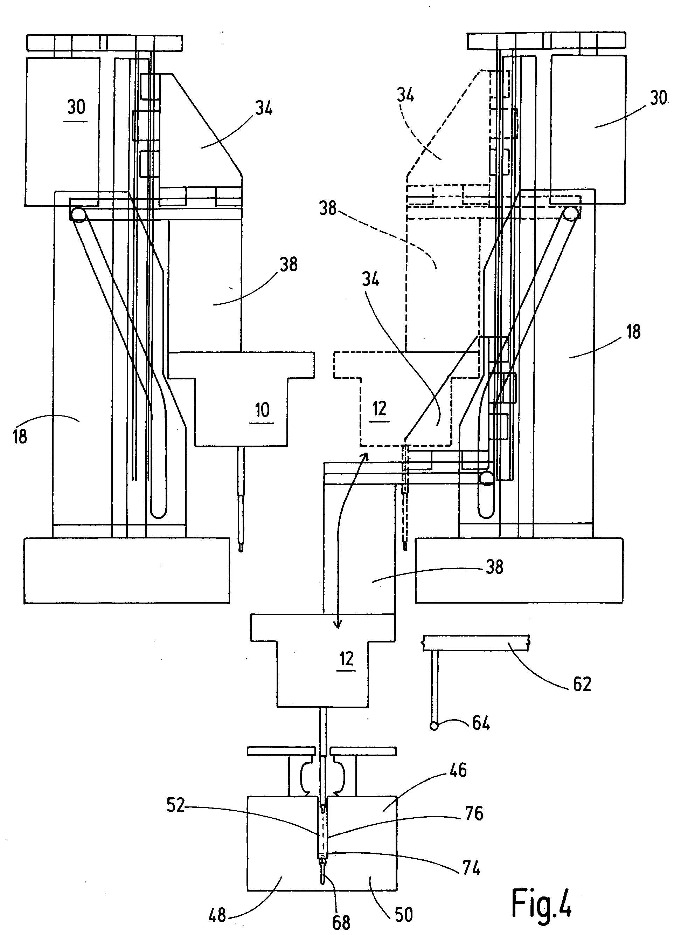

Der vorstehend beschriebene Bewegungsmechanismus ist auch entsprechend für die weitere Dosiereinheit 12 dergestalt verwirklicht. Während die Fig. 1 den Ausgangszustand für beide Dosiereinheiten 10, 12 zeigt, betrifft die Fig. 3 den Absenk- und Dosiervorgang für eine erste abzugebende Salbe mit einer vorgebbaren Viskosität, wohingegen die Dosiereinheit 12 mit der anderen Salbe sich noch in der Ausgangsposition befindet. Bei der Darstellung nach der Fig. 4 ist wiederum die Dosiereinheit 10 in der hochgefahrenen Start- oder Grundposition und die Dosiereinheit 12 ist für das Dosieren der weiteren Salbe in den Behälter in der abgesenkten, abgebenden Stellung.

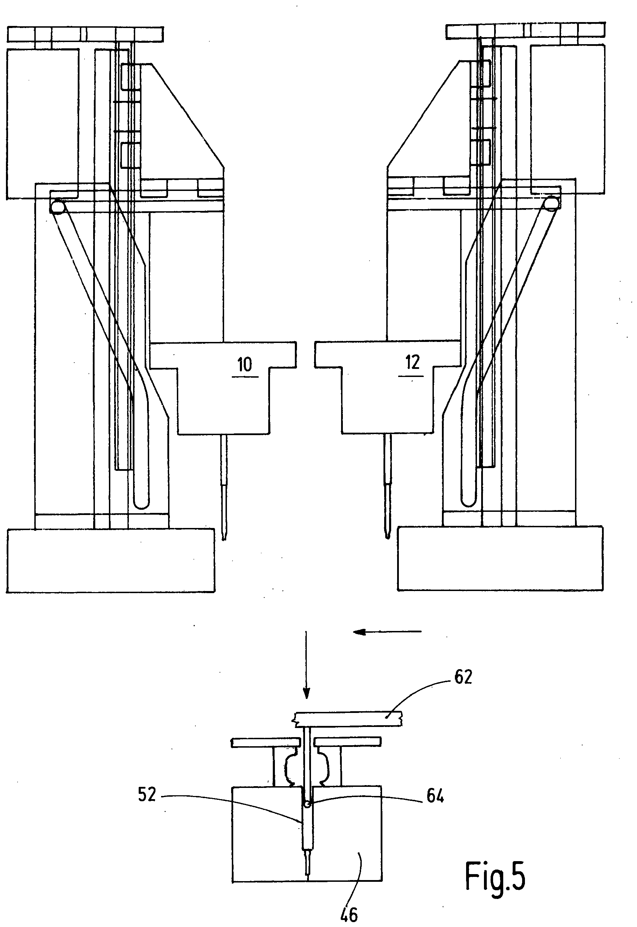

Das in den Fig. 3 bis 5 dargestellte Formwerkzeug 46 besteht aus zwei Formteilhälften 48,50, die zusammengeführt eine Formkavität begrenzen für die Blasformung eines Behälterteils 52 aus Kunststoffmaterial, der eine nach oben hin ausgerichtete Aufnahmeöffnung 54 aufweist. Über diese Öffnung 54 des Behälterteils 52 kann der jeweilige Fülldorn 14 der Dosiereinheiten 10, 12 für eine Medienabgabe in das Innere des Behälterteils 52 eingreifen. Ferner verfügt das Formwerkzeug 46 auf seiner Oberseite über miteinander korrespondierende Kopfformhälften 56, 58 (vgl. Fig. 3), die in zusammengefahrenem Zustand das Behälterkopfteil 60 (vgl. Fig. 6) des Behälters formen, sobald der jeweilige Fülldorn 14 aus der Gesamtform 46 mit ihren freien Öffnungsquerschnitten herausgefahren ist, was die Darstellung nach der Fig. 5 zeigt. Bevorzugt ist jedoch vorgesehen, dass vor Schließen der Kopfformhälften 56, 58 auf die Oberseite des geschichteten Salbenverbundes ein Ball oder eine Kugel 64 über eine Vakuum-Greifeinrichtung 62 abgelegt wird, die insoweit als ein Abschlussteil für die eingefüllten Medien resp. Salben dient.

Während zunächst mit der Dosiereinheit 10 die erste Salbe 74 in das Behälterteil 52 eingefüllt wurde, wurde nachfolgend über die Dosiereinheit 12 die zweite Salbe 76 in das Behälterteil 52 in Übereinanderanordnung eingebracht, und dann die zuletzt mittels der Dosiereinheit 12 eingebrachte Salbe 76 mittels der Kugel 64 als Abschlussteil versehen. Sobald die Vakuum-Greifeinrichtung 62 für die Kugel 64 wieder außer Eingriff mit dem Formwerkzeug 46 und seinen Formhälften 48, 50, 56 und 58 ist, können die Kopfformhälften 56, 58 aufeinander zufahren, wobei die Öffnung 54 sich zu einem engen Spalt 66 als Kapillaröffnung verjüngt. Ferner wird mit Schließen der Kopfformhälften 56, 58 das Behälterkopfteil 60 geformt und der Behälter als Ganzes mit seinen aufgenommenen Medien resp. Salben hermetisch gegenüber der Umgebung abgeschlossen.

Im Folgenden wird der mit der erfindungsgemäßen Vorrichtung nach den Fig. 1 bis 5 hergestellte Behälter anhand seiner Darstellung nach der Fig. 6 näher erläutert, die ein fertig hergestelltes Behältererzeugnis betrifft. Der in der Fig. 6 dargestellte Behälter besteht aus einem durchsichtigen, elastisch nachgiebigen Kunststoffmaterial, der allein oder zusammen mit anderen Behältern in der Art eines üblichen kartenartigen Behälterverbundes (nicht dargestellt) mittels der gezeigten und erläuterten Vorrichtung herstellbar, befüllbar und vorzugsweise steril verschließbar ist gemäß den Darstellungen nach den Fig. 1 bis 5. Der Behälter weist eine rohrförmige, zylindrische Dosierkammer als Behälterteil 52 auf, das an seinem in der Zeichnung gesehen unteren Ende durch einen Knebelverschluss 68 verschlossen ist, der eine eingeschnürte Sollbruchstelle 70 aufweist, über die der Knebelverschluss 68 von Hand abgedreht werden kann, um dergestalt die Abgabeöffnung 72 am unteren Ende des Behälterteils 52 freizugeben. In Blickrichtung auf die Fig. 6 gesehen ist in dem Behälterteil 52 zuunterst eine Salbe 74 angeordnet, die über eine horizontal verlaufende Trennfläche 75 von einer zuoberst angeordneten weiteren Salbe 76 separiert ist, wobei wiederum auf deren Oberseite oder Oberfläche die bereits genannte Kugel 64 als Abschlussteil aufliegt. Es wird aus der Darstellung nach der Fig. 6 deutlich, dass bei Freigabe der Abgabeöffnung 72 des Behälters hintereinander zunächst die Salbe 74 und dann die Salbe 76 ausgetragen wird, wohingegen die Kugel 64 im Behälterteil 52 des Behälters verbleibt. Aufgrund der nach unten hin konisch zulaufenden Abgabeöffnung 72 lässt sich diese ohne weiteres in Körperöffnungen, wie beispielsweise in eine Nasenöffnung od. dgl., einbringen.

Das gegenüberliegende Ende des Behälterteils 52 ist über die Verbindungsstelle 66 mit dem zusammendrückbaren Behälterkopfteil 60 verbunden, in dem sich ein insbesondere gasförmiges Austreibmedium, im vorliegenden Fall in Form von Luft, befindet. Beim Zusammendrücken des Behälterkopfteils 60 von Hand verdrängt das dort bevorratete Austreibmedium unter Mitbewegen der Kugel 64 die jeweils abzugebende Salbe aus dem Behälterteil 52 über die Abgabeöffnung 72 für einen Applizierungsvorgang nach außen in die Umgebung. Die Verbindungsstelle 66 zwischen dem Behälterteil 52 und dem Behälterkopfteil 60 ist aus einer Engstelle derart ausgebildet, dass eine Kapillarwirkung entsteht, die unabhängig von der räumlichen Lage des Behälters einen Übertritt des jeweiligen Abgabemediums aus dem Behälterteil 52 in das Behälterkopfteil 60 in jedem Fall verhindert. Ebenso kann das Austreibmedium ohne Zusammendrücken des Behälterkopfteils 60 nicht ungewollt in Richtung des Behälterteils 52 mit seinen Salben 74, 76 gelangen. Was nicht näher dargestellt und erläutert ist, kann die Kugel 64 aus dem plattenförmigen Knebelverschluss 68 ausgestanzt sein, wozu der Knebelverschluss 68 ursprünglich über ein in etwa mittig angeordnetes geformtes Kugelteil (nicht dargestellt) verfügt. Die jeweilige Kugel 64 kann dem Knebelverschluss 68 entnommen werden für einen nachfolgenden Prozessvorgang, sobald der dahingehende Behälter mit dem die Kugel 64 noch beinhaltenden Knebelverschluss 68 die Formmaschine mit dem Formwerkzeug 64 verlassen hat.

Nachfolgend wird nunmehr das erfindungsgemäße Verfahren anhand der aufgezeigten Vorrichtung nebst dem Behältererzeugnis näher erläutert. Wie bereits dargelegt, betrifft das Verfahren zum Herstellen des befüllten und geschlossenen Behälters ein Blasform-, Füll- und Schließverfahren (BFS-Verfahren), bei dem ein zunächst offenes, in einem Formwerkzeug 46 gehaltenes Behälterteil 52 in Hintereinanderabfolge mit Medien 74, 76, vorzugsweise unterschiedlicher Viskosität, derart befüllt wird, dass im Behälterteil 52 die eingefüllten Medien 74, 76 voneinander separiert sind, wobei anschließend das Behälterteil 52 unter Bildung des gesamten Behälters verschlossen wird. Grundsätzlich sind Medien zum Befüllen in das Behälterteil 52 vorzuziehen mit hochviskosem Charakter, wie beispielsweise Salbenprodukte.

Ferner wird für das dosierte Abgeben des jeweiligen Mediums, insbesondere in Form der Salbenprodukte 74, 76, eine volumetrische Medien- oder Salbendosierung eingesetzt, wobei eine kompakte luftfreie Füllung, ausgehend vom Tubus oder Fülldorn 14 des jeweiligen Applikators in Form der Dosiereinheiten 10, 12, realisiert werden muss. Eine solche volumetrische Mediendosierung ist beispielhaft in der DE 10 2008 028 772 A1 aufgezeigt, die eine Vorrichtung zum Befüllen von Behältern betrifft mit einer Einrichtung zum Zuführen von Füllgut zu mindestens einer Dosiereinrichtung in Form der Dosiereinheiten 10, 12, die einen Strömungsweg bildet, in dem ein zumindest für den Zeitraum von Dosiervorgängen öffenbares Dosierventil angeordnet ist, um Dosiermengen des Medien- oder sonstigen Füllguts über zumindest eine Füllleitung an das betreffende Behältnis abzugeben. Dabei weist die bekannte Dosiereinrichtung zur volumetrischen Mediendosierung im Strömungsweg stromabwärts des Dosierventils eine Einrichtung zum wahlweisen Erzeugen einer Sogwirkung am Strömungsweg auf, wobei eine Steuereinrichtung vorgesehen ist, die in Abhängigkeit von durch Schließen des Dosierventils jeweils beendeten Dosiervorgängen, die die Sogwirkung erzeugende Einrichtung für einen dosierten Abgabevorgang aktiviert.

Wie insbesondere die Darstellung nach der Fig. 3 zeigt, muss dabei der Fülldorn 14 der Dosiereinheit 10 mit ausreichend Distanz zum sich später einstellenden Füllspiegel im Behälterteil 52 positioniert werden und macht produktspezifisch keine, gegebenenfalls nur eine geringe Verfahrbewegung während der Füllung. Der hierfür erforderliche Druckbereich der Dosierung wird produktspezifisch anhand des Medien- oder Salbenproduktes ermittelt.

Vergleichbar wie vorstehend beschrieben und in der Fig. 4 exemplarisch dargestellt, wird auch das Medium resp. die Salbe 76 mittels einer volumetrischen Salbendosierung, wie vorstehend vorgestellt, über die Dosiereinheit 12 in das Behälterteil 52 der Salbe 74 nachfolgend eingefüllt, bei welcher sich sowohl die Dosiergeschwindigkeit als auch der Volumenstrom steuern lässt. Um eine unerwünschte Kraterbildung oder Vermischung mit der bereits eingefüllten Salbe 74 zu vermeiden, erfolgt die Füllung in einem niedrigeren Druckbereich als die Füllung mit der Salbe 74. Durch die Synchronisation zwischen der gesteuerten Dosiergeschwindigkeit und der Verfahrbewegung des Fülldorns 14 der Dosiereinheit 12 während der Füllung lässt sich wiederum eine kompakte, vorzugsweise luftblasenfreie Dosierung in den Tubus in Form des Behälterteils 52 realisieren. Zur Umsetzung der Synchronisation zwischen der Dosiergeschwindigkeit und der Verfahrbewegung des jeweiligen Fülldorns 14 wird der "Kolbenhub" der Dosiereinheit 12, wie auch die Verfahrbewegung des Fülldorns 14 selbst, mittels der bereits erläuterten Servoantriebe in Form von Elektromotor 30, Getriebe 28 und Antriebsspindel 26 unter Einsatz einer geeigneten Steuer- und Regeleinrichtung (nicht dargestellt) ausgeführt.

Vorrangig zum vorstehend beschriebenen Absenkhub und Füllprozess in die Form 46 müssen die Dosiereinheiten 10, 12 wechselweise horizontal in die mittige Position über die Öffnung 54 des Behälterteils 52 im Formwerkzeug 46 verbracht werden. Dies wird wiederum durch eine synchronisierte Bewegung der horizontalen und vertikalen Achsen unter Einsatz der Kulissenführung 20 entlang einer vorgebbaren definierten Bahnbewegung erreicht. Aufgrund der Schrägführung 22 der Kulissenführung 20 kann auf einen zusätzlichen horizontalen Querhub vollständig verzichtet werden, woraus sich eine Reduktion der Verfahrzeiten für die jeweiligen Dosiereinheiten 10, 12 ergibt zwischen ihrer jeweiligen Grund- und Abgabeposition.

Grundsätzlich würde auch die Möglichkeit bestehen, über Handhabungssysteme, wie Roboterarme, verschiedene Dosiereinheiten mit unterschiedlichen Abgabemedien über die Öffnung 54 des Behälterteils 52 zu verfahren. Dergestalt lasen sich dann auch mehr Medien in Hintereinanderabfolge in das Behälterteil 52 synchronisiert einbringen. Auch besteht die Möglichkeit, die Dosiereinheiten 10, 12 stationär anzuordnen und das Formwerkzeug 46 mit dem Behälterteil 52 und seiner freizuhaltenden Öffnung 54 dann immer in zeitlicher Hintereinanderabfolge unter die jeweilige Dosiereinheit 10, 12 zu verfahren, was auch im Rahmen einer sog. Karussellanordnung möglich wäre. Auch wäre es denkbar, dass mit der Maschinenanordnung nach den Fig. 1 bis 5 mittels der Dosiereinheit 10 zuerst eine Salbe 74 eingebracht wird, dann mit der Dosiereinheit 12 eine Salbe 76 mit anderer Viskosität nebst pharmazeutischer Wirkung und dass dann wiederum mit der Dosiereinheit 10 auf die Salbe 76 erneut die Salbe 74 separiert aufgebracht wird, etc.

Analog dem bisherigen Aufbau bei sog. Bottelpack-Herstellmaschinen kann auf einer bereits bestehenden Brücke der Maschine oberhalb der Schließeinheit, insbesondere in Form des Formwerkzeugs 46 mit seinen Formhälften 48, 50, 56, 58, die in den Fig. 1 bis 5 vorgestellte Maschineneinrichtung angeordnet werden, so dass in einfacher und kostengünstiger Weise auch bereits bestehende, ausgelieferte Maschineneinheiten dergestalt nachgerüstet oder umgerüstet werden können.

## Patentansprüche

1. Vorrichtung zum Befüllen eines Behälters, wobei mindestens zwei Dosiereinheiten (10, 12) für je in ein Behälterteil (52) über dessen freie Öffnung (54) einzufüllende Abgabemedien (74, 76) auf einer Verschiebeeinheit (38) festgelegt sind, **dadurch gekennzeichnet, dass** die mindestens zwei Dosiereinheiten jeweils auf einer Verschiebeeinheit festgelegt sind und dass die Verschiebeeinheit (38) mittels mindestens eines Antriebsmittels (26, 28, 30) über eine Schrägführung (22) einer Kulissenführung (20) die jeweilige Dosiereinheit (10, 12) aus einer Ausgangsposition in eine Abgabeposition über die Behälterteilöffnung (54) und wieder zurück verfährt.

2. Vorrichtung nach Anspruch 1, **dadurch gekennzeichnet, dass** die jeweilige Schrägführung (22) als Teil der Kulissenführung (20) in einem Grundträger (18) verläuft, der einen Spindeltrieb (26) aufweist, der eine Konsole (34) in vertikaler Richtung verfährt, an der in horizontaler Richtung verfahrbar die Verschiebeeinheit (38) mit der zugeordneten Dosiereinheit (10, 12) angeordnet ist.

3. Verfahren unter Verwendung einer Vorrichtung nach Anspruch 1 oder 2 zum Herstellen eines befüllten und geschlossenen Behälters, insbesondere nach dem Blasform-, Füll- und Schließverfahren, bei dem ein zunächst offenes, in einem Formwerkzeug (46) gehaltenes, mittels eines Blasdorns blasgeformtes und/oder vakuumgeformtes Behälterteil (52) über seine freie, nach oben hin ausgerichtete Behälterteilöffnung (54) mittels Dosiereinheiten (10, 12) in Hintereinanderabfolge mit Medien (74, 76) unterschiedlicher Art, insbesondere Viskosität, derart befüllt wird, dass im Behälterteil (52) die eingefüllten Medien (74, 76) voneinander separiert werden, und anschließend mit Schließen der Kopfformhälften (56, 58) des Formwerkzeuges (46) ein Behälterkopfteil (60) geformt und das Behälterteil (52) unter Bildung des Behälters verschlossen wird.

4. Verfahren nach Anspruch 3, **dadurch gekennzeichnet, dass** zumindest ein Medium (74), das in das Behälterteil (52) eingefüllt wird, ein hochviskoses Produkt ist, wie eine Salbe, eine Creme oder ein Gel.

5. Verfahren nach Anspruch 3 oder 4, **dadurch gekennzeichnet, dass** mindestens ein weiteres, in das Behälterteil (52) einzufüllendes Medium (76) gleichfalls unter den hochviskosen Produkten, wie Salben, Cremes, Gelen, ausgewählt wird.

6. Verfahren nach einem der Ansprüche 3 bis 5, **dadurch gekennzeichnet, dass** im Behälterteil (52) die jeweils einzufüllenden Medien (74, 76) in Übereinanderanordnung derart eingebracht werden, dass es zu keiner Durchmischung zwischen den benachbart angrenzenden Medien (74, 76) kommt, indem die zwischen den angrenzenden Medien (74, 76) entstehende Trennschicht (75) beim Befüllen kraterfrei erzeugt wird.

7. Verfahren nach einem der Ansprüche 3 bis 6, **dadurch gekennzeichnet, dass** das jeweilige Medium (74, 76) vorzugsweise im Wesentlichen lufteinschlussfrei mittels einer volumetrischen Dosiereinheit (10, 12) in vorgebbaren Mengen in das Behälterteil (52) eingefüllt wird.

8. Verfahren nach einem der Ansprüche 3 bis 7, **dadurch gekennzeichnet, dass** jedes in das Behälterteil (52) einzufüllende Medium (74, 76) mit einer ihm zuordenbaren eigenen Dosiereinheit (10, 12) zugeführt wird.

9. Verfahren nach einem der Ansprüche 3 bis 8, **dadurch gekennzeichnet, dass** in der Abfolge der Befüllung mit dem jeweiligen Medium (74, 76) die zuordenbaren Dosiereinheiten (10, 12) hintereinander über die freie Behälterteilöffnung (54) derart verfahren werden, dass die erste Dosiereinheit (10) von einer Ausgangsposition heraus über die freie Öffnung (54) des Behälterteils (52) in eine Abgabeposition verfahren wird, über diese freie Öffnung (54) das erste Medium (74) in das Innere des Behälterteils (52) abgegeben wird und anschließend in ihre Ausgangsposition zurückfährt, und dass nachfolgend eine zweite (12) und etwaig weitere Dosiereinheiten in Abfolge zu der freien Behälterteilöffnung (54) in ihre Abgabeposition für einen Medium-Abgabevorgang aus ihrer Ausgangsposition heraus verfahren und in diese wieder zurückverfahren werden.

## Claims

1. Device for filling a container, at least two dosing units (10, 12) for respective discharge media (74, 76) to be poured into a container part (52) via the free opening (54) thereof being fixed on a displacement unit (38), **characterised in that** the at least two dosing units are each fixed on a displacement unit and **in that** the displacement unit (38) moves the respective dosing unit (10, 12) from a starting position into a discharge position over the container part opening (54) and back again by means of at least one drive means (26, 28, 30) via an oblique guide (22) of a sliding guide (20).

2. Device according to claim 1, **characterised in that** the respective oblique guide (22) extends as part of the sliding guide (20) in a base support (18), which comprises a spindle drive (26), which moves a support panel (34) in the vertical direction, the displacement unit (38) being arranged with the assigned dosing unit (10, 12) on said support panel such that it can be moved in the horizontal direction.

3. Method using a device according to claim 1 or 2 for producing a filled and closed container, in particular using the blow-fill seal method, in which an initially open container part (52) held in a moulding tool (46) and blow-moulded and/or vacuum-moulded by means of a blow pin is filled in succession via its free, upwards-pointing container part opening (54) by means of dosing units (10, 12) with media (74, 76) of varying types, in particular viscosity, such that the poured media (74, 76) are separated from one another in the container part (52), and a container top part (60) is then formed by closing the top halves (56, 58) of the moulding tool (46) and the container part (52) is sealed, forming the container.

4. Method according to claim 3, **characterised in that** at least one medium (74), which is poured into the container part (52), is a high-viscosity product such as an ointment, cream or gel.

5. Method according to claim 3 or 4, **characterised in that** at least one further medium (76) to be poured into the container part (52) is also selected from the high-viscosity products such as ointments, creams or gels.

6. Method according to any one of claims 3 to 5, **characterised in that** the respective media (74, 76) to be poured in are placed one on top of the other in the container part (52) such that there is no mixing between the adjacent, adjoining media (74, 76) **in that** the separating layer (75) arising between the adjoining media (74, 76) is produced in a crater-free manner during filling.

7. Method according to any one of claims 3 to 6, **characterised in that** the respective medium (74, 76) is preferably poured in pre-definable quantities into the container part (52) by means of a volumetric dosing unit (10, 12) such that it is substantially free of air inclusions.

8. Method according to any one of claims 3 to 7, **characterised in that** each medium (74, 76) to be poured into the container part (52) is supplied with its own dosing unit (10, 12) that can be assigned to said medium.

9. Method according to any one of claims 3 to 8, **characterised in that** the assignable dosing units (10, 12) are moved in succession over the free container part opening (54) in the sequence of filling with the respective medium (74, 76) such that the first dosing unit (10) is moved from a starting position over the free opening (54) of the container part (52) into a discharge position, the first medium (74) is discharged into the inside of the container part (52) via this free opening (54) and then moved back into its starting position, and **in that** a second (12) and any further dosing units are then moved in succession from their starting position to the free container part opening (54) into their discharge position for a medium discharge process and moved back into said starting position again.

## Revendications

1. Installation de remplissage d'un récipient, dans laquelle au moins deux unités (10, 12) d'addition dosée de, respectivement, milieux (74, 76) à distribuer en vue de remplir une partie (52) formant récipient par son ouverture (54) libre, sont fixées sur une unité (38) de déplacement, **caractérisée en ce que** les au moins deux unités d'addition dosée sont fixées chacune sur une unité de déplacement et **en ce que** l'unité (38) de déplacement fait passer, au moyen d'au moins un moyen (26, 28, 30) d'entraînement, par l'intermédiaire d'un guidage (22) incliné d'un guidage (20) à coulisse, l'unité (10, 12) respective d'addition dosée d'une position initiale à une position de distribution au-dessus de l'ouverture (54) de la partie formant récipient, et la ramène.

2. Installation suivant la revendication 1, **caractérisée en ce que** le guidage (22) incliné respectif s'étend, comme partie du guidage (20) à coulisse, dans un support (18) de base, qui a une transmission (26) à broche, qui déplace, dans la direction verticale, une console (34), sur laquelle l'unité (38) de déplacement, pouvant être déplacée dans la direction horizontale, est disposée avec l'unité (10, 12) d'addition dosée associée.

3. Procédé, en utilisant une installation suivant la revendication 1 ou 2, de production d'un récipient rempli et fermé, notamment par le procédé de moulage par insufflation, remplissage et scellement, dans lequel on remplit une partie (52) formant récipient, d'abord ouverte, maintenue dans un outil (46) de moulage, moulée par insufflation au moyen d'un mandrin d'insufflation et/ou formée sous vide, par son ouverture (54) formant récipient libre, dirigée vers le haut, au moyen d'unités (10, 12) d'addition dosée, successivement, de milieux (74, 76) de types différents, notamment de viscosités différentes, de manière à séparer, dans la partie (52) formant récipient, les uns des autres, les milieux (74, 76) de remplissage, et ensuite, par fermeture des moitiés (56, 58) de moule de tête de l'outil (46) de moulage, on moule une partie (60) de tête de récipient et on ferme la partie (52) formant récipient, en formant le récipient.

4. Procédé suivant la revendication 3, **caractérisé en ce qu'**au moins un milieu (74), dont la partie (52) formant récipient est remplie, est un produit très visqueux, comme une pommade, une crème ou un gel.

5. Procédé suivant la revendication 3 ou 4, **caractérisé en ce que** l'on choisit au moins un autre milieu (76), dont on remplit la partie (52) formant récipient, de même parmi les produits très visqueux, comme les pommades, le crèmes, les gels.

6. Procédé suivant l'une des revendications 3 à 5, **caractérisé en ce que** l'on introduit dans la partie (52) formant récipient, en superposition, les milieux (74, 76) de remplissage, de manière à ne pas donner un mélange entre les milieux (74, 76) voisins, en produisant, sans cratère lors du remplissage, la couche (75) de séparation se créant entre les milieux (74, 76) voisins.

7. Procédé suivant l'une des revendications 3 à 6, **caractérisé en ce que** l'on remplit la partie (52) formant récipient du milieu (74, 76) respectif, de préférence sensiblement exempt d'inclusion d'air, en des quantités pouvant être données à l'avance au moyen d'une unité (10, 12) d'addition dosée volumétrique.

8. Procédé suivant l'une des revendications 3 à 7, **caractérisé en ce que** l'on apporte chaque milieu (74, 76) de remplissage à la partie (52) formant récipient par une unité (10, 12) d'addition dosée, qui peut lui être associée en propre.

9. Procédé suivant l'une des revendications 3 à 8, **caractérisé en ce que** l'on déplace dans la suite du remplissage par le milieu (74, 76) respectif, les unités (10, 12) d'addition dosée pouvant être associées, les unes derrière les autres, au-dessus de l'ouverture (54) libre de la partie formant récipient, de manière à déplacer la première unité (10) d'addition dosée d'une position initiale à une position de distribution au-dessus de l'ouverture (54) libre de la partie (52) formant récipient, on envoie, par cette ouverture (54) libre, le premier milieu (74) à l'intérieur de la partie (52) formant récipient et, ensuite, on ramène la première unité (10) de dosage dans sa position initiale et **en ce que**, ensuite, on déplace de sa position initiale une deuxième (12), et éventuellement d'autres unités d'addition dosée, successivement, à l'ouverture (54) libre de la partie formant récipient à sa position de distribution pour une opération de distribution de milieux, et on la ramène à sa position initiale.
